# EUROPEAN PATENT APPLICATION

(11) **EP 4 783 735 A1**
(43) Date of publication of application: **29.07.2026**
(21) Application number: 26154572.7
(22) Date of filing: 27.01.2026
(51) Int. Cl.: H05B 3/86, B60J 1/00, B60S 1/02, B32B 17/10, B60H 1/00

(54) **COMPUTER SYSTEM AND METHOD FOR AUTOMATIC VEHICULAR DEMIST/DEFOG FUNCTIONS**

(30) Priority: 27.01.2025 US 202563749763 P
(71) Applicant: Betterfrost Technologies Inc., West Oakville, ON L6L 5W2 (CA)
(72) Inventor: Redding, Derrick, Oakville, L6L 5W2 (CA); SAAD, Sameh, Oakville, L6L 5W2 (CA); SHEIR, Ahmed, Oakville, L6L 5W2 (CA)
(74) Representative: Humphrey-Evans, Edward John

(57) **Abstract**

Systems, devices and methods for automatic fog prevention are provided. A system includes a surface including a conductive layer; at least one sensor configured for providing an operating condition of the surface to a control unit; and the control unit configured for analyzing the operating condition, and providing power to the conductive layer based on the analysis to prevent fog formation on the surface. A method includes executing via a computer system comprising at least one processor: providing, by at least one sensor, an operating condition of a surface to a control unit, wherein the surface includes a conductive layer; analyzing, by the control unit, the operating condition; and providing, by the control unit, power to the conductive layer based on the analysis to prevent fog formation on the surface.

## Description

### Technical Field

The following relates generally to vehicle surface management, and more particularly to systems and methods for automatic fog prevention.

### Introduction

Differences between various internal and external conditions (e.g., temperature, humidity, etc.) of a vehicle can have the undesirable effect of condensation formation on different surfaces of the vehicle. While condensation formation on most surfaces may only be a nuisance, the formation of condensation on other surfaces such as windshields or side windows as "mist" or "fog" can impair visibility and therefore pose significant hazards.

In such scenarios, vehicle operators may be required to attempt to clear the mist or fog by hand, or to engage with the vehicle to do the same. However, a risk associated with this is that a vehicle operator may become distracted from the road during these times, thereby increasing the likelihood of a collision.

In addition, certain operating conditions may cause fog formation on surfaces which a vehicle operator cannot reach, or which the vehicle is not able to clear otherwise.

Accordingly, there is a need for an improved system and method for mist or fog management (de-mist / de-fog) that overcomes at least some of the disadvantages of existing systems and methods.

This background information is provided to reveal information believed by the applicant to be of possible relevance to the present disclosure. No admission is necessarily intended, nor should be construed, that any of the preceding information constitutes prior art against the present disclosure.

### Summary

A system for automatic de-mist or de-fog management is provided. The system includes a surface including a conductive layer; at least one sensor configured for providing an operating condition of the surface to a control unit; and the control unit configured for analyzing the operating condition, and providing power to the conductive layer based on the analysis to prevent fog formation on the surface.

In an embodiment, the conductive layer is transparent.

In an embodiment, the control unit is powered by at least one of a vehicle; and a portable power supply.

In an embodiment, the control unit provides power as electro-thermal pulses, that is to say the control unit provides short, controlled pulses of electrical power through a conductive layer associated with the surface, rather than steady power.

In an embodiment, the operating condition includes at least one of: an external temperature; a cabin temperature; a cabin relative humidity; a vehicle speed; a traction battery voltage; a state-of-charge; and historical data of the aforementioned.

In an embodiment, the surface includes at least one of a windshield; a side glass; a roof; and a rear glass.

In an embodiment, the surface is composed of at least one of glass; polycarbonate (PC); polymer; and metal.

In an embodiment, the control unit optimizes power provided to the conductive layer based on at least one of a size of the surface; and a location of the surface.

In an embodiment, the control unit optimizes power provided to the conductive layer in terms of at least one of amplitude; and pulse duration.

In an embodiment, the control unit is further configured for estimating a relative humidity of air surrounding the surface based on at least one of a vehicle speed; a cabin air recirculation setting; an air direction; an environment temperature sensor; a cabin relative humidity sensor; a passenger seat sensor; a rain sensor.

In an embodiment, the control unit is further configured for calculating a minimum threshold temperature at which no water vapor will condensate on the surface.

In an embodiment, the control unit is further configured for calculating an amount of transient energy - short bursts of energy that occur for brief periods - required to reach the minimum threshold temperature and to remove any water vapor condensation.

In an embodiment, the control unit is further configured for calculating the steady state energy needed to maintain the surface mist-free or fog-free.

In an embodiment, the control unit is further configured for automatically adjusting at least one of a transient energy and a steady state energy in response to a change in an operating condition.

In an embodiment, the control unit is further configured for analyzing a history of use of the system including at least one of the power supplied; a voltage supplied; a current supplied; a period of time during which power was provided to the surface; and a real time of each system activation cycle.

In an embodiment, the control unit is further configured for converting a transient energy and a steady state energy needed to remove, reduce or prevent mist-/fog-formation or moisture condensation upon the surface into power over a certain amount of time.

In an embodiment, the control unit is further configured for adjusting a calculated power and a time of power supply to match a calculated amount of transient energy and steady state energy based on an available power in a high voltage traction battery which is determined by at least one of: a vehicle state of charge (SoC); and a vehicle battery management system (BMS).

In an embodiment, the system provides multiple operating modes including at least one of a maximum defog mode; an energy balance demist/defog mode; and an eco demist/defog mode, to provide demisting or defogging functions or maintenance of a substantially moisture-free inside surface of a vehicle.

In an embodiment, the control unit is further configured for leveraging a measurement performed by relative humidity sensors and temperature sensors that are at least one of: attached directly to the surface; situated in close proximity to the surface.

A method of automatic mist/fog to remove, reduce or prevent misting/ fogging of a vehicular interior surface is provided. The method includes executing via a computer system comprising at least one processor: providing, by at least one sensor, an operating condition of a surface to a control unit, wherein the surface includes a conductive layer; analyzing, by the control unit, the operating condition; and providing, by the control unit, power to the conductive layer based on the analysis to prevent fog formation on the surface.

In an embodiment, the conductive layer is transparent.

In an embodiment, the control unit is powered by at least one of a vehicle; and a portable power supply.

In an embodiment, the control unit provides power as electro-thermal pulses.

In an embodiment, the operating condition includes at least one of an external temperature; a cabin temperature; a cabin relative humidity; a vehicle speed; a traction battery voltage; a state-of-charge; and historical data of the aforementioned.

In an embodiment, the surface includes at least one of a windscreen/windshield; a side glass; a roof; and a rear glass.

In an embodiment, the surface is composed of at least one of glass; polycarbonate (PC); polymer; and metal.

In an embodiment, the control unit optimizes power provided to the conductive layer based on at least one of a size of the surface; and a location of the surface.

In an embodiment, the control unit optimizes power provided to the conductive layer in terms of at least one of amplitude; and pulse duration.

In an embodiment, the method further includes estimating a relative humidity of air surrounding the surface based on at least one of a vehicle speed; a cabin air recirculation setting; an air direction; an environment temperature sensor; a cabin relative humidity sensor; a passenger seat sensor; a rain sensor.

In an embodiment, the method further includes calculating a minimum threshold temperature at which no water vapor will condense on the surface.

In an embodiment, the method further includes calculating a transient energy needed to reach the minimum threshold temperature and to remove any water vapor condensation.

In an embodiment, the method further includes calculating the steady state energy needed to maintain the surface in a demisted state or fog-free.

In an embodiment, the method further includes automatically adjusting at least one of a transient energy and a steady state energy in response to a change in an operating condition.

In an embodiment, the method further includes analyzing a history of use of the system including at least one of the power supplied; a voltage supplied; a current supplied; a period of time during which power was provided to the surface; and a real time of each system activation cycle.

In an embodiment, the method further includes converting a transient energy and a steady state energy needed to remove, reduce or prevent mist/fog-formation on the surface into power over a certain amount of time.

In an embodiment, the method further includes adjusting a calculated power and a time of power supply to match a calculated transient energy and steady state energy based on an available power in a high voltage traction battery which is determined by at least one of a vehicle state of charge (SoC); and a vehicle battery management system (BMS).

In an embodiment, providing power includes multiple operating modes including at least one of a maximum defog mode; an energy balance demist/defog mode; and an eco demist/defog mode.

In an embodiment, the method further includes leveraging a measurement performed by relative humidity sensors and temperature sensors that are at least one of attached directly to the surface; situated in close proximity to the surface.

A device for automatic mist/fog prevention within a vehicle is provided. The device includes a processor; and a non-transitory computer readable memory having stored thereon instructions that, when executed by the processor, cause the device to: receive an operating condition of a surface from at least one sensor, wherein the surface includes a conductive layer; analyze the operating condition; and provide power to the conductive layer based on the analysis to prevent fog formation on the surface.

In an embodiment, the device further includes a network interface.

In an embodiment, the conductive layer is transparent.

In an embodiment, the device is powered by at least one of: a vehicle; and a portable power supply.

In an embodiment, the device provides power as electro-thermal pulses.

In an embodiment, the operating condition includes at least one of an external temperature; a cabin temperature; a cabin relative humidity; a vehicle speed; a traction battery voltage; a state-of-charge; and historical data of the aforementioned.

In an embodiment, the surface includes at least one of a windshield; a side glass; a roof; and a rear glass.

In an embodiment, the surface is composed of at least one of glass; polycarbonate (PC); polymer; and metal.

In an embodiment, the device optimizes power provided to the conductive layer based on at least one of a size of the surface; and a location of the surface.

In an embodiment, the device optimizes power provided to the conductive layer in terms of at least one of amplitude; and pulse duration.

In an embodiment, the device is further configured for estimating a relative humidity of air surrounding the surface based on at least one of a vehicle speed; a cabin air recirculation setting; an air direction; an environment temperature sensor; a cabin relative humidity sensor; a passenger seat sensor; a rain sensor.

In an embodiment, the device is further configured for calculating a minimum threshold temperature at which no water vapor will condense upon the surface.

In an embodiment, the device is further configured for calculating a transient energy needed to reach the minimum threshold temperature and to remove any water vapor condensation.

In an embodiment, the device is further configured for calculating the steady state energy needed to maintain the surface fog-free.

In an embodiment, the device is further configured for automatically adjusting at least one of a transient energy and a steady state energy in response to a change in an operating condition.

In an embodiment, the device is further configured for analyzing a history of use of the system including at least one of the power supplied; a voltage supplied; a current supplied; a period of time during which power was provided to the surface; and a real time of each system activation cycle.

In an embodiment, the device is further configured for converting a transient energy and a steady state energy needed to prevent fog-formation on the surface into power over a certain amount of time.

In an embodiment, the device is further configured for adjusting a calculated power and a time of power supply to match a calculated transient energy and steady state energy based on an available power in a high voltage traction battery which is determined by at least one of a vehicle state of charge (SoC); and a vehicle battery management system (BMS).

In an embodiment, providing power includes multiple operating modes including at least one of a maximum demist/defog mode; an energy balance demist/defog mode; and an eco demist/defog mode.

In an embodiment, the device is further configured for leveraging a measurement performed by relative humidity sensors and temperature sensors that are at least one of attached directly to the surface; situated in close proximity to the surface.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of an example system for automatic mist/fog prevention, according to an embodiment;
Figure 2 is a flowchart of an example method of automatic mist/fog prevention, according to an embodiment;
Figure 3 is schematic diagram of an example device for automatic mist/fog prevention, according to an embodiment; and
Figure 4 is a schematic diagram of an example electronic device, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

As used herein, the term "about" should be read as including variation from the nominal value, for example, a +/-10% variation from the nominal value. It is to be understood that such a variation is always included in a given value provided herein, whether or not it is specifically referred to.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present disclosure.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to vehicle surface management, and more particularly to systems and methods for automatic fog prevention.

As various conditions can influence the formation of fog, which can be challenging and hazardous to remove, problems to be solved include how to pre-empt the formation of fog and how to automate removal of the same.

The present disclosure relates to automatic fog prevention on surfaces such as, for example, glass surfaces in vehicles. One or more sensors may be used to provide operating conditions of a surface to a control, where the surface includes a conductive layer. The control unit is then able to analyze the operating condition, and direct power to the conductive layer based on the analysis to prevent fog formation on the surface.

Advantageously, techniques disclosed herein may be implemented with any surface, in particular transparent surfaces, such as those in a vehicle. This would promote not only safety, but also convenience as, for example, a windshield, roof, or window may be automatically kept fog free regardless of whether or not a vehicle operator or other mechanisms in the vehicle are able to reach that particular surface.

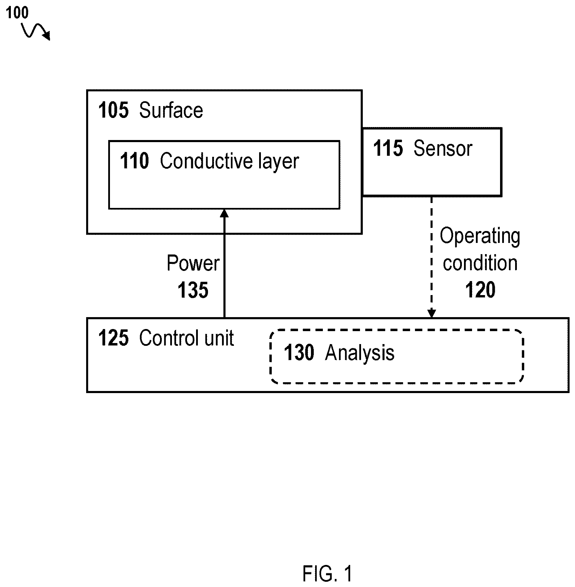

Referring now to Figure 1, shown therein is an example system 100 for automatic mist/fog prevention, according to an embodiment of the present disclosure.

The system 100 includes a surface 105. For clarity of illustration, only a single surface 105 is shown, but it will be appreciated that the system 100 may include any number of surfaces 105, e.g., a plurality of surfaces 105.

The surface 105 includes a conductive layer 110.

The system 100 further includes at least one sensor 115 configured for providing an operating condition 120 of the surface 105 to a control unit 125. For clarity of illustration, only a single sensor 115 is shown, but it will be appreciated that the system 100 may include any number of sensors 115, e.g., a plurality of the sensors 115.

The system 100 further includes the control unit 125. For clarity of illustration, only a single control unit 125 is shown, but it will be appreciated that the system 100 may include any number of control units 125, e.g., a plurality of control units 125.

A single control unit 125 may thus be in communication with a single surface 105, or a plurality of surfaces 105. Similarly, a surface 105 may be in communication with a single control unit 125, or a plurality of control units 125.

The control unit 125 is configured for analyzing the operating condition 120.

The control unit 125 is further configured for providing power 135 to the conductive layer 110 based on the analysis 130 to prevent fog formation on the surface 105.

Thus, power delivery may be turned on and off automatically as needed without any user intervention. Similarly, the power scheme may be updated automatically as any of the operating conditions change in real time.

In an embodiment, the conductive layer 110 is transparent.

In an embodiment, the control unit 125 is powered by at least one of a vehicle, and a portable power supply.

In an embodiment, the control unit 125 provides power 135 as electro-thermal pulses - short bursts of energy that occur for brief periods. Conveniently, a microcontroller and power electronics (e.g., 48 V pulse drivers) manage timing, pulse shape, and power delivery so the system only heats where and when needed, whereby to provide targeted, boundary-layer heating.

In an embodiment, the operating condition 120 includes at least one of an external temperature, a cabin temperature, a cabin relative humidity, a vehicle speed, a traction battery voltage, a state-of-charge; and historical data of the aforementioned.

In an embodiment, the surface 105 includes at least one of a windshield/windscreen, a side glass, a roof, and a rear glass.

In an embodiment, the surface 105 is composed of at least one of glass, polycarbonate (PC), polymer, and metal.

In an embodiment, the control unit 125 optimizes power 135 provided to the conductive layer 110 based on at least one of a size of the surface 105, and a location of the surface 105.

In an embodiment, the control unit 125 optimizes power 135 provided to the conductive layer 110 in terms of at least one of amplitude, and pulse duration.

Optimizing the power 135 delivery in terms of amplitude and pulse duration to the surface 105, achieves the lowest energy consumption and reduces the power demand from a high voltage (HV) traction battery (e.g., in electric vehicles) where a system on chip (SoC) or driving cycle (e.g., acceleration or high-speed driving) may restrict the available power to auxiliary services, such as a defogging system.

In an embodiment, the control unit 125 is further configured for estimating a relative humidity of air surrounding the surface 105 based on at least one of a vehicle speed; a cabin air recirculation setting (e.g., on or off); an air direction (e.g., foot, face, defrost, etc.); an environment temperature sensor; a cabin relative humidity sensor; a passenger seat sensor; a rain sensor.

In an embodiment, the control unit 125 is further configured for calculating a minimum threshold temperature at which no water vapor will condensate on the surface 105.

In an embodiment, the control unit 125 is further configured for calculating a transient energy needed to reach the minimum threshold temperature and to remove any water vapor condensation.

In various embodiments, this may be prior to activation of the system (e.g., when the vehicle has just been switched on).

In an embodiment, the control unit 125 is further configured for calculating the steady state energy needed to maintain the surface 105 fog-free.

In an embodiment, the control unit 125 is further configured for automatically adjusting at least one of a transient energy and a steady state energy in response to a change in an operating condition.

In an embodiment, the control unit 125 is further configured for analyzing a history of use of the system including at least one of the power 135 supplied; a voltage supplied; a current supplied; a period of time during which power 135 was provided to the surface 105; and a real time (e.g., absolute time) of each system activation cycle.

In an embodiment, the control unit 125 is further configured for converting a transient energy and a steady state energy needed to prevent mist/fog-formation on the surface 105 into power over a certain amount of time.

In an embodiment, the control unit 125 is further configured for adjusting a calculated power and a time of power supply to match a calculated transient energy and steady state energy based on an available power in a high voltage traction battery which is determined by at least one of a vehicle state of charge (SoC); and a vehicle battery management system (BMS).

In an embodiment, the system 100 allows for multiple operating modes including at least one of a maximum demist/defog mode; an energy balance demist/defog mode; and an eco demist/defog mode.

As used herein, an eco demist/defog mode may refer to, for example, an energy efficient setting which may operate without maximizing fuel or battery consumption. Similarly, the energy balance demist/defog mode may be, for example, a demist/defog level situated between the maximum demist/defog mode and the eco demist/defog mode.

In various embodiments, each mode adjusts the energy reference and power. In some cases, it can exceed the ones calculated initially by the system to prioritize: short demist/defog time, using higher than the calculated energy; long demist/defog time using lower power level, using the calculated energy; and balance using the calculated energy (subject to the available power in the high voltage traction battery).

In an embodiment, the control unit 125 is further configured for leveraging a measurement performed by relative humidity sensors and temperature sensors that are at least one of attached directly to the surface 105; situated in close proximity to the surface 105.

In various embodiments, if such sensors so not exist, the system 100 utilizes models and estimation techniques as stated above. In other words, the system 100 may be operated using sensors or sensor-less.

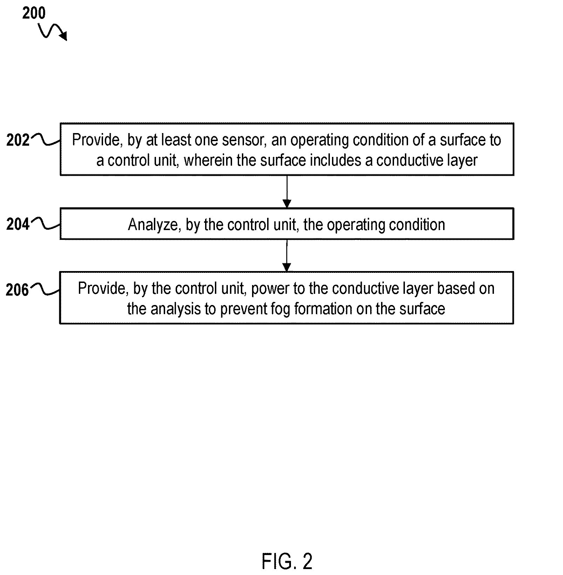

Referring now to Figure 2, shown therein is a method 200 of automatic mist/fog prevention, according to an embodiment of the present disclosure.

The method 200 may be encoded as computer-executable instructions and executed by one or more computing devices comprising one or more processors. In an embodiment, the method 200 may be executed by the system 100 of Figure 1.

At 202, the method 200 includes providing, by at least one sensor, an operating condition of a surface to a control unit, wherein the surface includes a conductive layer.

At 204, the method 200 further includes analyzing, by the control unit, the operating condition.

At 206, the method 200 further includes providing, by the control unit, power to the conductive layer based on the analysis to prevent fog formation on the surface.

Thus, power delivery may be turned on and off automatically as needed without any user intervention. Similarly, the power scheme may be updated automatically as any of the operating conditions change in real time.

In an embodiment, the conductive layer is transparent.

In an embodiment, the control unit is powered by at least one of a vehicle, and a portable power supply.

In an embodiment, the control unit provides power as electro-thermal pulses.

In an embodiment, the operating condition includes at least one of an external temperature, a cabin temperature, a cabin relative humidity, a vehicle speed, a traction battery voltage, a state-of-charge; and historical data of the aforementioned.

In an embodiment, the surface includes at least one of an interior windshield, a side glass, a roof, and a rear glass.

In an embodiment, the surface is composed of at least one of glass, polycarbonate (PC), polymer, and metal.

In an embodiment, the control unit optimizes power provided to the conductive layer based on at least one of: a size of the surface; and a location of the surface.

In an embodiment, the control unit optimizes power provided to the conductive layer in terms of at least one of amplitude, and pulse duration.

Optimizing the power delivery in terms of amplitude and pulse duration to the surface, achieves the lowest energy consumption and reduces the power demand from a high voltage (HV) traction battery (e.g., in electric vehicles) where a system on chip (SoC) or driving cycle (e.g., acceleration or high-speed driving) may restrict the available power to auxiliary services, such as a defogging system.

In an embodiment, the method further includes estimating a relative humidity of air surrounding the surface based on at least one of a vehicle speed; a cabin air recirculation setting; an air direction; an environment temperature sensor; a cabin relative humidity sensor; a passenger seat sensor; a rain sensor.

In an embodiment, the method further includes calculating a minimum threshold temperature at which no water vapor will condensate on the surface.

In an embodiment, the method further includes calculating a transient energy needed to reach the minimum threshold temperature and to remove any water vapor condensation.

In an embodiment, the method further includes calculating the steady state energy needed to maintain the surface mist/fog-free.

In an embodiment, the method further includes automatically adjusting at least one of a transient energy and a steady state energy in response to a change in an operating condition.

In an embodiment, the method further includes analyzing a history of use of the system including at least one of the power supplied; a voltage supplied; a current supplied; a period of time during which power was provided to the surface; and a real time (e.g., absolute time) of each system activation cycle.

In an embodiment, the method further includes converting a transient energy and a steady state energy needed to prevent mist/fog-formation on the surface into power over a certain amount of time.

In an embodiment, the method further includes adjusting a calculated power and a time of power supply to match a calculated transient energy and steady state energy based on an available power in a high voltage traction battery which is determined by at least one of a vehicle state of charge (SoC); and a vehicle battery management system (BMS).

In an embodiment, providing power includes multiple operating modes including at least one of a maximum demist/defog mode; an energy balance demist/defog mode; and an eco demist/defog mode.

In various embodiments, each mode adjusts the energy reference and power. In some cases, it can exceed the ones calculated initially by the system to prioritize: short demist/defog time, using higher than the calculated energy; long demist/defog time using lower power level, using the calculated energy; and balance using the calculated energy (subject to the available power in the high voltage traction battery).

In an embodiment, the method further includes leveraging a measurement performed by relative humidity sensors and temperature sensors that are at least one of attached directly to the surface; situated in close proximity to the surface.

In various embodiments, if such sensors so not exist, the system 100 utilizes models and estimation techniques as stated above. In other words, the system 100 may be operated using sensors or sensor-less.

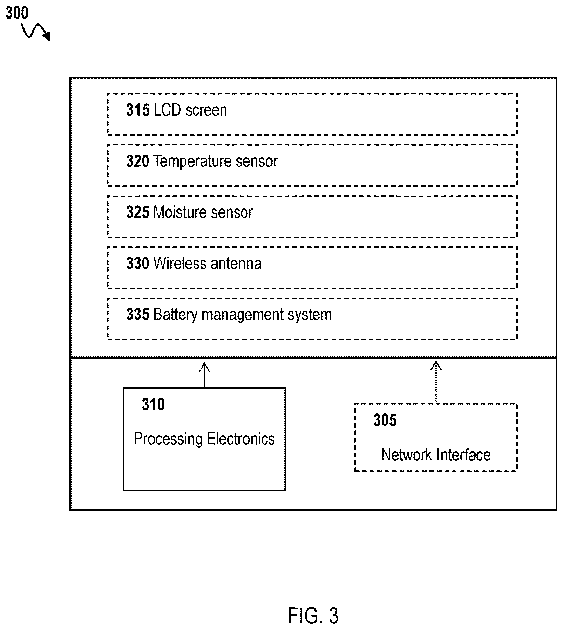

Referring now to Figure 3, shown therein is an example device 300 for automatic fog prevention, according to an embodiment of the present disclosure.

In various embodiments, the device 300 may be used, for example, to implement control units disclosed herein such as, for example, the control unit 125 of Figure 1.

The device 300 includes processing electronics 310.

In some embodiments, the device 300 may also include a network interface 305.

The processing electronics 310 can include a computer processer executing program instructions stored in memory, or other electronics components such as digital circuitry, including for example FPGAs and ASICs.

The network interface 305 can include an optical communication interface or radio communication interface, such as a transmitter and receiver.

In various embodiments, the device 300 may further include, without limitation, an LCD screen 315, one or more temperature sensors 320, one or more moisture or humidity sensors 325, a wireless antenna 330 for network communication, and a battery management system 335.

According to certain embodiments, any or all of the depicted elements may be utilized, or only a subset of the elements. Further, the device 300 may contain multiple instances of certain elements, such as multiple temperature sensors, humidity sensors, or antennas. Also, elements of the device 300 may be directly coupled to other elements.

The one or more temperature sensors 320 and the one or more moisture or humidity sensors 325 may be envisioned as being a part of the device 300, or they may be separate to the device 300, or a combination or the foregoing. The one or more temperature sensors 320 and the one or more moisture or humidity sensors 325 may be used to monitor operating conditions of, for example, a vehicle that the device 300 is located in.

In some embodiments, the device 300 is powered by a portable power supply. Where such a portable power supply is a battery, the battery management system 335 may be an integral or integrated part of the device 300, or it may be installed within batteries, or it may be a separate device. Batteries and battery management systems/devices may vary for different battery types.

The device 300 may include several other functional components, each of which is partially or fully implemented using the underlying processing electronics 310 and, where applicable, the network interface 305.

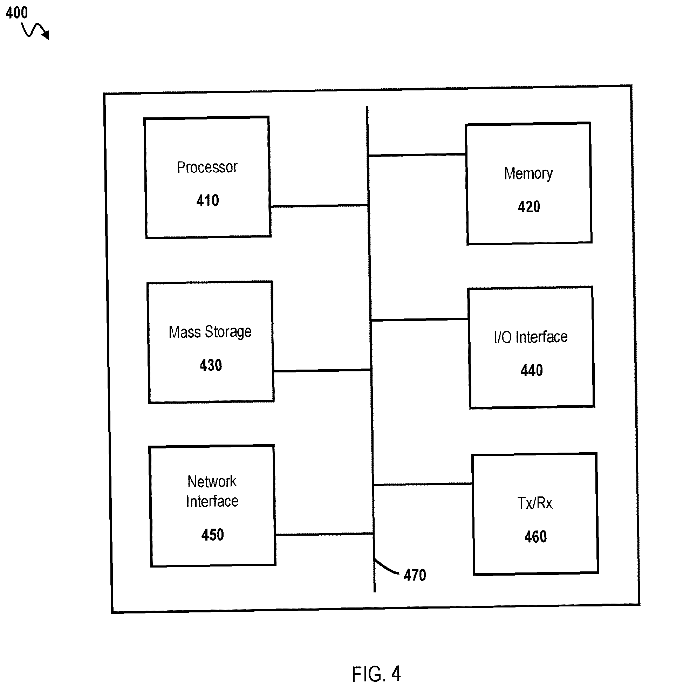

Referring now to Figure 4, shown therein is a schematic diagram of an example electronic device 400 that may perform any or all of operations of the above methods and features explicitly or implicitly described herein, according to an embodiment.

For example, a computer equipped with network function may be configured as electronic device 400. The electronic device 400 may be used to implement the device 300 for automatic fog prevention of Figure 3, for example.

As shown, the device includes a processor 410, such as a Central Processing Unit (CPU) or specialized processors such as a Graphics Processing Unit (GPU) or other such processor unit, memory 420, non-transitory mass storage 430, I/O interface 440, network interface 450, and a transceiver 460, all of which are communicatively coupled via bi-directional bus 470.

According to certain embodiments, any or all of the depicted elements may be utilized, or only a subset of the elements. Further, the device 400 may contain multiple instances of certain elements, such as multiple processors 410, memories 420, or transceivers 460. Also, elements of the hardware device may be directly coupled to other elements without the bi-directional bus.

Additionally, or alternatively to a processor 410 and memory 420, other electronics, such as integrated circuits, may be employed for performing the required logical operations.

The memory 420 may include any type of non-transitory memory such as static random-access memory (SRAM), dynamic random-access memory (DRAM), synchronous DRAM (SDRAM), read-only memory (ROM), any combination of such, or the like.

The mass storage element 430 may include any type of non-transitory storage device, such as a solid-state drive, hard disk drive, a magnetic disk drive, an optical disk drive, USB drive, or any computer program product configured to store data and machine executable program code.

According to certain embodiments, the memory 420 or mass storage 430 may have recorded thereon statements and instructions executable by the processor 410 for performing any of the aforementioned method operations described above.

For example, the electronic device 400 may be configured to: receive an operating condition of a surface from at least one sensor, wherein the surface includes a conductive layer; analyze the operating condition; and provide power to the conductive layer based on the analysis to remove, reduce or prevent mist/fog formation on the surface.

While the above description provides examples of one or more apparatus, methods, or systems, it will be appreciated that other apparatus, methods, or systems may be within the scope of the claims as interpreted by one of skill in the art.

Elements of each embodiment may be incorporated into other embodiments, for example, configurations discussed in relation to one embodiment, may be applied to other embodiments disclosed herein.

Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present disclosure.

## Claims

1. A system (100) for automatic vehicular mist / fog removal, reduction or prevention, the system comprising:
a surface (105) including a conductive layer (110);
at least one sensor (115) configured for providing an operating condition (120) of the surface to a control unit (125);
the control unit configured for:
analyzing the operating condition (120) to provide an analysis (130); and
providing power (135) to the conductive layer based on the analysis (130) to remove, reduce or prevent fog formation on the surface.

2. The system of claim 1, wherein the control unit (125) provides power as electro-thermal pulses.

3. The system according to claim 1 or 2, wherein the operating condition includes at least one of: an external temperature; a surface temperature; surface relative humidity; a cabin temperature; a cabin relative humidity; a vehicle speed; a traction battery voltage; a state-of-charge; and historical data of the aforementioned.

4. The system according to any one of claims 1 - 3, wherein the control unit optimizes power provided to the conductive layer based on at least one of: a size of the surface; and a location of the surface; or
wherein the control unit optimizes power provided to the conductive layer in terms of at least one of: amplitude; and pulse duration.

5. The system according to any one of claims 1 - 4, wherein the control unit is further configured for estimating a relative humidity of air surrounding the surface based on at least one of: a vehicle speed; a cabin air recirculation setting; an air direction; an environment temperature sensor; a cabin relative humidity sensor; a passenger seat sensor; a rain sensor; or
wherein the control unit is further configured for calculating a minimum threshold temperature at which no water vapor will condensate on the surface; or
wherein the control unit is further configured for calculating a transient energy needed to reach the minimum threshold temperature and to remove any water vapor condensation; or
wherein the control unit is further configured for calculating the steady state energy needed to maintain the surface fog-free.

6. The system according to any one of claims 1 - 5, wherein the control unit (125) is further configured for automatically adjusting at least one of: a transient energy and a steady state energy in response to a change in an operating condition; or
wherein the control unit is further configured for analyzing a history of use of the system (100) including at least one of: the power supplied; a voltage supplied; a current supplied; a period of time during which power was provided to the surface; and a real time of each system activation cycle; or
wherein the control unit is further configured for converting a transient energy and a steady state energy needed to remove, reduce or prevent mist/fog-formation on the surface into power over a certain amount of time; or
wherein the control unit is further configured for adjusting a calculated power and a time of power supply to match a calculated transient energy and steady state energy based on an available power in a high voltage traction battery which is determined by at least one of: a vehicle state of charge (SoC); and a vehicle battery management system (BMS); or
wherein the control unit is further configured for leveraging a measurement performed by relative humidity sensors and temperature sensors that are at least one of: attached directly to the surface; situated in close proximity to the surface.

7. The system according to any one of claims 1 - 6, wherein the system provides multiple operating modes including at least one of: a maximum defog mode; an energy balance demist / defog mode; and an eco demist / defog mode.

8. A method (200) of automatic vehicular mist/fog removal, reduction or prevention, the method comprising executing via a computer system comprising at least one processor:
providing (202), by at least one sensor, an operating condition (120) of a surface (105) to a control unit (125), wherein the surface includes a conductive layer (110);
analyzing (204), by the control unit, the operating condition (120); and
providing (206), by the control unit, power to the conductive layer based on the analysis to prevent fog formation on the surface (105).

9. The method of claim 8, wherein the control unit (125) provides power in the form of electro-thermal pulses.

10. The method according to any claim 8 or 9, wherein the operating condition includes at least one of: an external temperature; a cabin temperature; a cabin relative humidity; a vehicle speed; a traction battery voltage; a state-of-charge; and historical data of the aforementioned.

11. The method according to any one of claims 8 - 10, wherein the control unit optimizes power provided to the conductive layer based on at least one of: a size of the surface; and a location of the surface; or
wherein the control unit optimizes power provided to the conductive layer in terms of at least one of: amplitude; and pulse duration.

12. The method according to any one of claims 8 - 11, further including estimating a relative humidity of air surrounding the surface based on at least one of: a vehicle speed; a cabin air recirculation setting; an air direction; an environment temperature sensor; a cabin relative humidity sensor (325); a passenger seat sensor; a rain sensor; or
further including calculating a minimum threshold temperature at which no water vapor will condense on the surface; or
further including calculating a transient energy needed to reach the minimum threshold temperature and to remove any water vapor condensation; or
further including calculating the steady state energy needed to maintain the surface fog-free.

13. The method according to any one of claims 8 - 12, further including automatically adjusting at least one of: a transient energy and a steady state energy in response to a change in an operating condition; or
further including analyzing a history of use of the system including at least one of: the power supplied; a voltage supplied; a current supplied; a period of time during which power was provided to the surface; and a real time of each system activation cycle; or
further including converting a transient energy and a steady state energy needed to prevent mist/fog-formation on the surface into power over a certain amount of time; or
further including adjusting a calculated power and a time of power supply to match a calculated transient energy and steady state energy based on an available power in a high voltage traction battery which is determined by at least one of: a vehicle state of charge (SoC); and a vehicle battery management system (BMS); or
further including leveraging a measurement performed by relative humidity sensors and temperature sensors that are at least one of: attached directly to the surface; situated in close proximity to the surface.

14. The method according to any one of claims 8 - 13, wherein providing power includes multiple operating modes including at least one of: a maximum defog mode; an energy balance defog mode; and an eco defog mode.

15. A device (400) for automatic vehicular fog / mist removal, reduction or prevention, the device comprising:
a processor (410); and
a non-transitory computer readable memory (420) having stored thereon instructions that, when executed by the processor, cause the device to:
receive an operating condition of a surface (105) from at least one sensor, wherein the surface includes a conductive layer (110);
analyze the operating condition (120) to provide an analysis (130); and
provide power to the conductive layer based on the analysis to remove, reduce or prevent mist / fog formation on the surface.
